# EUROPEAN PATENT SPECIFICATION

(11) **EP 1 478 205 B1**
(45) Date of publication and mention of the grant of the patent: **17.07.2013**
(21) Application number: 04380106.7
(22) Date of filing: 12.05.2004
(51) Int. Cl.: H04W 8/08, H04W 8/18, H04W 8/22, H04M 17/00, H04W 60/00

(54) **Device, method and computer program for detecting the activation of a customer in a cellular mobile telephony network**
Verfahren, Vorrichtung und Computerprogramm zur Erkennung des Aktivierungszustands eines Benutzers in einem zellularen Mobiltelefonnetz
Procédé, dispositif et programme d'ordinateur pour la détection l'état d'activation d'un utilisateur dans un réseau de téléphonie mobile cellulaire

(30) Priority: 12.05.2003 ES 200301087
(43) Date of publication of application: 17.11.2004
(73) Proprietor: Vodafone Group PLC, Newbury Berkshire RG14 2FN (GB)
(72) Inventor: Almenar Belenguer, Pedro, 28020 Madrid (ES); Martinez Perea, Rogelio, 28042 Madrid (ES)
(74) Representative: Davila Baz, Angel

(56) References cited:
- WO-A-97/38538
- WO-A-99/17499
- WO-A-99/30480
- US-A- 5 721 768
- ETSI: "Digital cellular telecommunications system (Phase2+) (GSM); Universal Mobile Telecommunications System (UMTS); Technical Report on the Gateway Location Register (3GPP TR 23.909 version 4.0.0 Release 4)" ETSI TR 123 909 V4.0.0 (2001-03), 31 March 2001 (2001-03-31), pages 1-61, XP002439469 france

## Description

### FIELD OF THE INVENTION

The invention is encompassed within the field of mobile telephony. As is known, English acronyms and terms are normally used in said field to refer to elements and concepts belonging to the field. The English acronyms and terms used herein will be explained throughout the text.

### BACKGROUND OF THE INVENTION

The purpose of the invention is to detect, in an easy manner and which is applicable in current mobile telephony networks, the moment in which a customer activates his/her mobile telephone, for example when a subscriber with a prepay card begins to use the prepay card in a mobile telephony network.

The mobile telephony backbone network is formed by certain main nodes which carry out the basic functions in the network, such as connecting and disconnecting the terminals, routing voice calling and sending short messages.

For the mobile telephony network or PLMN (Public Land Mobile Network), the geographic area is divided into cells, each one of which is serviced by a "base station" or BTS (Base Transceiver Station). Figure 1 shows a network of this type, where it can be seen how a mobile telephone 1 (in this document, a mobile telephone, the subscriber- the person who has the mobile telephone- and the customer are referred to indistinctively) is in a cell 2 corresponding to a base station 3; other base stations 3 correspond to other cells of the network.

Each base station (BTS) depends on a base station controller node or BSC (Base Station Controller) 4. The BSC 4 manages the activity of several base stations 3 which it is in charge of, for example, routing the calls and messages to the base station covering the destination mobile telephone.

In turn, several BSCs 4 depend on one switching center or MSC (Mobile Switching Center) (5, 6), a network node controlling several BSCs and managing the control of the location of the subscribers who are in its control area.

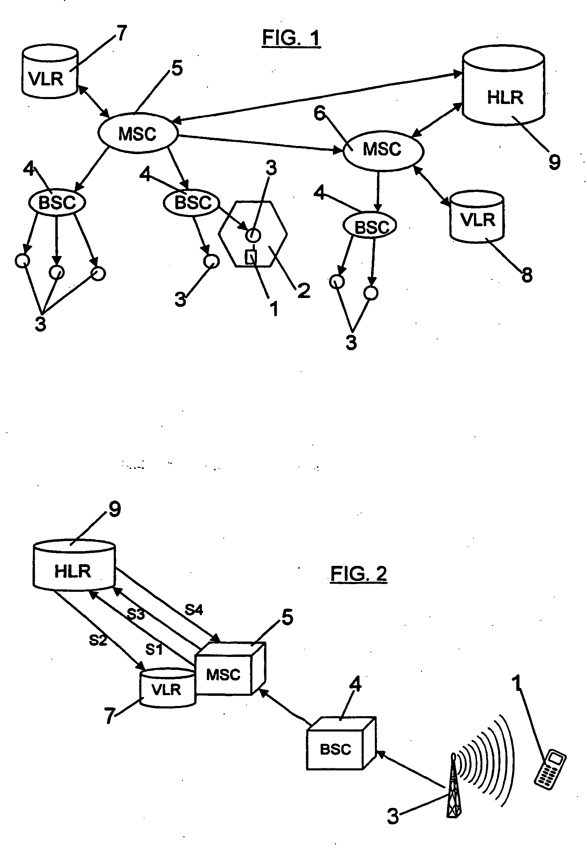

Furthermore, the network shown in figure 1 comprises several Visitor Location Registers or VLR (7, 8). The VLR is a "visiting" subscriber database which temporarily stores certain data related to subscribers who are in the network area corresponding to the VLR. Examples of data stored in the VLR are the IMSI (International Mobile Subscriber Identity), the MSISDN (the telephone number itself which is dialed to call the mobile telephone), or the TMSI (temporary identity different from the IMSI for security reasons), the location area where the subscriber has been registered and the supplementary services of the subscribing customers who, at that time, are in the network area covered by that VLR. Each VLR covers a location area. There can be several VLRs in the area covered by an MSC, but it is also possible for a VLR to contain information of areas covered by several MSCs. In some systems, there is one VLR for each MSC, and sometimes the MSC and the VLR are integrated in the same physical unit, which is sometimes called "MSC/VLR".

The network also comprises a Home Location Register or HLR 9 which is the database where all the data regarding the mobile service of the subscribers of the network is stored, such as their IMSI and MSISDN identity, the VLR in which they are located (each change of location area carried out by a mobile is detected by the network and its VLR address is automatically updated in the HLR database). There is also information concerning the type of service offered to the subscriber as well as the supplementary services provided to him/her. Usually in networks with many subscribers, the subscriber data is distributed in several HLRs.

The location update procedure is widely disclosed in the document ETSI 123 909 V4.0.0 (2001-03), a technical report from the European Telecommunications Standards Institute.

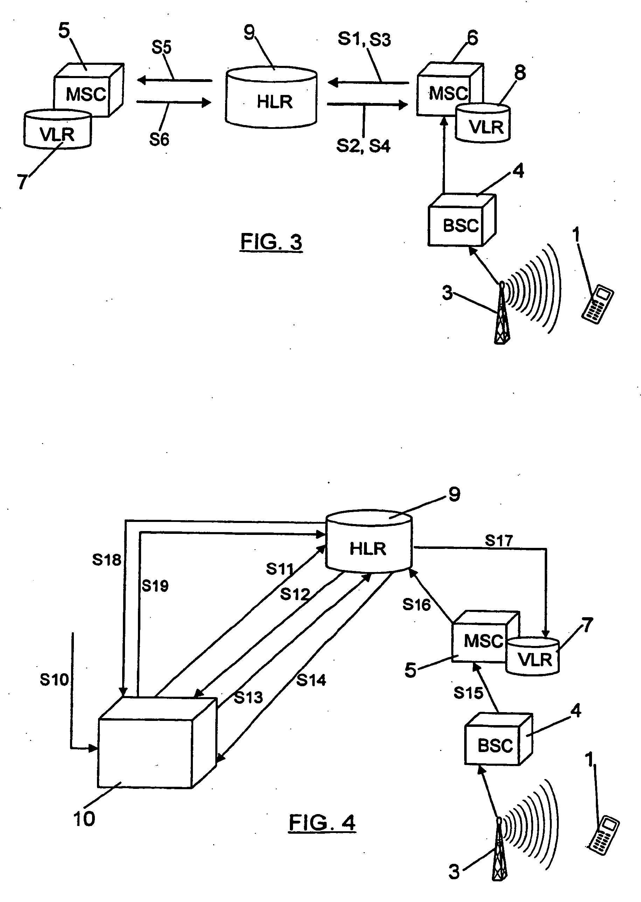

Logically, in order for a customer to be able to receive a call, it is important to be able to locale" him/her in the network, such that a call can be routed to his/her terminal through the corresponding MSC and BTS 3. To that end, it is important that whenever a customer is active (with the mobile telephone turned on), there is centralized information in the network which allows knowing what location area the subscriber is in, in order to thus be able to route the call to said location area. It is likewise important that there is centralized information in the network indicating if the customer is active and where. The solution adopted in GSM (Global System for Mobile Communication) is based on the notification by the mobile telephone of the changes of position it is undergoing. This process comprises two independent dialogues: the new position update dialogue and the previous position de-update dialogue, which will be described below with reference to figures 2 and 3:
1) Update process: this process is carried out when the customer turns on the mobile telephone terminal and, furthermore, every time the customer changes location area (i.e. when he/she goes from the location area corresponding to one VLR to the location area corresponding to another VLR). Each location area is formed by a set of cells and corresponds to one VLR.
   As schematically shown in figure 2, when the customer is connected to the network (by turning on his/her telephone) or when he/she changes location area (entering into the location area corresponding to one VLR 7), the MSC 5 corresponding to the BSC 4 corresponding to the base station 3 in the cell of which the customer is located, sends (step S1 in figure 2) an *Update Location* request to the HLR 9, so that the HLR 9 sends the subscription data of the customer to the MSC 5. This data includes the data specifying the services available to said customer.
   The HLR 9 stores the address of the VLR 7 (univocally corresponding to the location area in which the subscriber is located) to know where the customer is located and to be able to direct incoming calls to said location area, and sends one or several *Insert Subscriber Data* messages with the requested information to the MSC 5 (step S2 in figure 2); the MSC 5 stores the data in the associated VLR 7. To check that the operations are carried out correctly, there is an exchange of messages between the MSC and the HLR. The MSC 5 responds (step S3) with an *Insert Subscriber Data Result* to inform the HLR 9 of if the data has reached it correctly, and lastly, the HLR 9 sends (step S4) an *Update Location Result,* where it communicates if the update process has been carried out correctly.
2) De-update process: this process consists of the HLR informing a VLR (through an associated MSC) that a customer previously located in his/her location area has changed location area, as a result of which he/she is controlled by another MSC.

This occurs, for example, if the subscriber of the mobile telephone 1 in figure 1 moves from the cell 2 associated to the MSC 5 (location area of the VLR 7) to a cell associated to the MSC 6, corresponding to the location area of the VLR 8.

In that case, as schematically shown in figure 3, the update process (steps S1-S4 discussed in relation to figure 2 and schematically shown in figure 3) is carried out first, and then, once the update process has been successfully completed (by means of which the HLR 9 "knows" that the subscriber is in the location area corresponding to the VLR 8), the HLR 9 informs the VLR 7 that the customer previously located in its location area has changed location area, as a result of which he/she is controlled by an MSC corresponding to another VLR.

To that end, the HLR sends (step S5 in figure 3) a *Cancel Location* message to the MSC 5 indicating for said MSC to remove the data on said the customer temporarily stored in the VLR 7. The MSC 5 responds with a *Cancel Location Result* message (step S6) to the HLR confirming that the operation has been carried out correctly.

The mobile telephones include cards, provided by a mobile telephony operator and which allow the customer to use the mobile telephone; it is usually considered that the mobile telephone as such, also called the subscriber equipment, is constituted of the terminal and of the card. In GSM, the card is called SIM (Subscriber Identity Module) and is the element to which the network subscription actually corresponds, such that if a customer changes terminals, keeping the same card, he/she still conserves his/her subscription profile and telephone number. In UMTS (Universal Mobile Telecommunications System, also called Third Generation Mobile Telephony), this card is usually called USIM (Universal Subscriber Identity Module; the Subscriber Identity Module in UMTS).

The cards of an operator placed in the distribution channel are called pre-activated cards, a term indicating that they still have not been used by the customer, but which have already been defined in the systems of the operator for their subsequent functioning. The subscriptions corresponding to those cards must be defined in the corresponding HLRs, i.e. a series of actions must be carried out to insert said subscription data, including the IMSI (International Mobile Subscriber Identity), MSISDN (Mobile Station International ISDN Number- the actual telephone number), and the services available to the customer, in the HLRs; if the HLR corresponding to a card does not include this data, the card cannot be used.

If the moment in which a card is considered to be in use is called "activation", in the case of cards corresponding to *post-pay subscriptions,* the activation occurs when the corresponding customer signs the subscription contract with the operator. From that moment, the customer can, in theory, use his/her card.

In the case of cards corresponding to *prepay subscriptions,* since the mobile telephone can be used from the moment in which it is placed in the sales pack (the box including the terminal, its accessories, the SIM card and certain additional information for using the terminal and card is usually thus referred to), it could be considered that the activation occurs when the customer turns on the telephone and registers in the network for the first time with the card in question.

If the "activation" of a prepay card is considered to occur when the customer turns on the telephone for the first time, there are currently no means for finding out when said "activation" occurred. The way mobile telephony networks function today, neither the MSCs/VLRs nor the HLRs supply this information to external systems.

Knowing the "moment of activation" can be important, for example, for defining commissions to salespersons, defining temporary validity promotions, etc. For example, if a promotion of X Euros in calls, lasting for Y months, is defined and directed towards new customers, as of when do the Y months begin to be counted? If it is from the pre-activation of the card, given that the time between pre-activation and sale of the card is usually long (sometimes even months), in many cases the customer will never benefit from the promotion, or perhaps he/she would only benefit from it for some days until it expires. To this end, it is preferable to begin counting the time of the promotion period from the moment in which the card begins to be used; however, the operator of the system currently does not know when this occurs; it cannot even be assumed that it is the moment of sale: the pack could be sold as a gift and be opened weeks after the sale.

In the same manner, when there is a list of customers who have not been registered in the network for a long time, it may be interesting to know the moment in which said customers log into the network after such a long time, for example to be able to carry out marketing actions which tend to make them use the mobile telephone more (sending them messages, activating possible promotions, etc.). There are currently no means for being able to inform the systems responsible for such actions of the registration of the subscriber in the network.

To that end, there is a need to provide means so that an entity (for example, a mobile telephony service provider) can find out when a customer registers in the network, for example, when he/she registers for the first time (which can be of interest in the case of pre-activated cards), or when a customer registers in the network after a long period of time without being registered.

### DESCRIPTION OF THE INVENTION

The invention is carried out according to independent claims 1, 3 and 5. A first aspect of the invention refers to a device for detecting the activation of a customer in a cellular mobile telephony network, comprising:
means for receiving and storing data related to at least one customer in the mobile telephony network in a database (this data can include the IMSI and the MSISDN of the customer, as well as data related to the type of card: prepay, post-pay, etc.; the data can be received in the form of a list comprising this data for a plurality of customers, and the data can be stored in an internal database of the device for detecting activation);
means for generating and sending an *Update Location* request for said at least one customer to a Home Location Register (HLR) of the network, the update request including a fictitious indication of the location area configured such that the Home Location Register (HLR) sends a subsequent *Cancel Location* message corresponding to the location of the same customer to the device for detecting activation;
means for receiving said *Cancel Location* message from the Home Location Register (HLR);
means for modifying the content of a first data field associated to the customer as a response to the reception of said *Cancel Location* message, said first data field being a field indicating an activation time of the customer and/or an activated/not activated state of the customer.

The device of the invention thus "deceives" the HLR; it can be said that it passes itself off as a fictitious VLR/MSC, causing the HLR, following the conventional de-update process, to send a de-update message to the device of the invention when the subscriber activates his/her telephone in the network and initiates communication with a base station (BTS) associated to an MSC/VLR (and, therefore, initiating the corresponding update and de-update processes). Thus, a piece of data indicating an activation time of the customer (which can correspond to the moment in which the cancel location message is received or the moment in which the content of the data field is modified), and/or an activated/not activated state of the customer (for example, the content of the data field can go from being a code corresponding to a "not activated" state to being a code corresponding to an "activated" state), is introduced in a data field (the "first field"). The data field can be part of the same list of data discussed in the foregoing, or part of another list or database, for example, an external database. In other words, the invention contemplates the possibility of modifying a "first field" in an internal database of the device, as well as the possibility of modifying the "first field" in an external database, by means of sending a message to said database.

In this manner and by verifying the content of said "first field", the activation of a customer (of a card) can be detected practically instantly.

The term "device" must be interpreted in a broad sense: it is not necessary for all the components constituting the device to be integrated in a single physical entity (box, module,...), but rather the different components of the device can constitute separate physical entities, arranged such that they can communicate and interact with one another, according to that described above and according to that described below.

The means for generating and sending the *Update Location* request can be configured to send said request for the customers appearing in the database in a sequential manner and according to the content of at least one second data field, associated to the customer, of said database. Said second data field can partially or completely coincide with said first data field, i.e. for example, the means for generating and sending the update location request can be configured to send the request only for
- the customers for whom the first data field still does not include a piece of data indicating an "activation time";
- the customers for whom the first data field includes a code indicating that they still have not been activated; and/or
- the customers for whom the first data field includes a piece of data indicating an "activation time" exceeding a predetermined "level of antiquity", i.e. it indicates that the subscriber has not been active in the network for "a long time".

The second data field can alternatively or complementarily include one or several positions indicating the number of times the *Update Location* request has been sent and/or when said request was last sent to the HLR for the customers of the list. The invention can thus be configured such that it takes into account this piece of data in the moment of deciding when and in what order to send the location update positions for the different customers in the data base. There can also be a third data field which includes this data.

The means for generating and sending the *Update Location* request can be configured to send said request for the customers appearing in said database in a time-spaced manner and/or during certain periods of the day and/or night, for the purpose of preventing that sending said request for a large number of customers causes a network overload.

As suggested in the foregoing, the first data field can be a data field in the database, for example, a field on the same list including the IMSI and MSISDN of each customer.

Another aspect of the invention refers to a method for detecting the activation of a customer in a cellular mobile telephony network, comprising the steps of:
receiving and storing data related to at least one customer in the mobile telephony network in a database (this data can include the IMSI and the MSISDN of the customer, as well as the data related to the type of card: prepay, post-pay, etc.; the data can be received in the form of a list comprising this data for a plurality of customers);
means for generating and sending a Home Location Register (HLR) of the network, an *Update Location* request for said at least one customer, the update request including a fictitious indication of the location area configured such that the Home Location Register (HLR) sends a subsequent *Cancel Location* message corresponding to the location of the same customer to the device for detecting activation;
receiving said *Cancel Location* message from the Home Location Register (HLR);
modifying the content of a first data field associated to the customer as a response to the reception of said *Cancel Location* message, said first data field being a field indicating an activation time of the customer and/or an activated/not activated state of the customer.

That which has been discussed above in relation to the device is also applicable to the method, *mutatis mutandis.*

Said *Update Location* request for the customers appearing in said database is sent in a sequential manner and according to the content of at least one second data field, associated to the customer, of said database. This second field has already been discussed in detail above, in the description of the device. As has already been discussed:
- said data field can at least partially coincide with said first data field;
- the request for the customers appearing in said database can be sent in a time-spaced manner and/or during certain periods of the day and/or night, for the purpose of preventing that sending said request for large number of customers causes a network overload;
- the first data field can be a data field in the data base.

Another aspect of the invention refers to a computer program comprising programming instructions for making a computer carry out the method described in the foregoing when the program is run in the computer.

Another aspect of the invention refers to said computer program in a support means; the support means can be, for example, a diskette, a CD-ROM, a computer memory, or any other type of data and instruction support means. The support means can also be an electric or optical signal, for example, a signal propagated through a telecommunications network.

### BRIEF DESCRIPTION OF THE DRAWINGS

A series of drawings will be explained below very briefly, which will aid in better understanding the invention and which are expressly related to one embodiment of said invention, which is presented as an illustrative and non-limiting example thereof.
Figure 1 schematically shows some of the main nodes of a conventional mobile telephony network, according to the state of the art.
Figure 2 schematically shows an update process according to the state of the art.
Figure 3 schematically shows a de-update process according to the state of the art.
Figure 4 schematically shows the different steps carried out according to a preferred embodiment of the invention.
Figure 5 schematically shows the device according to a preferred embodiment of the invention.
Figures 6A and 6B schematically show configuration examples of the data of a customer stored in the database of the device, according to a preferred embodiment of the invention.

### DESCRIPTION OF A PREFERRED EMBODIMENT OF THE INVENTION

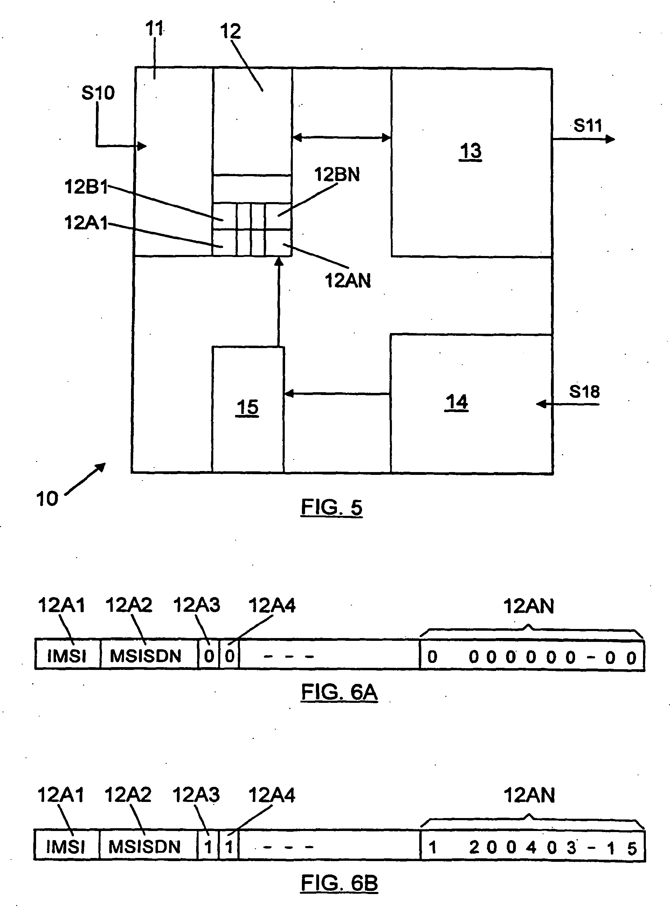

Figure 4 shows a device 10 for detecting the activation of a customer, according to a preferred embodiment of the invention, integrated in a mobile telephony network including an HLR 9 and several VLRs and MSCs, of which one MSC 5 and one VLR 7 are shown, as well as one BSC 4, one BTS 3 and one customer or mobile telephone 1; the network can be a network such as the one described in relation to figures 2 and 3, only the device 10 has been added to it. Figure 5 schematically shows the main functional modules forming part of the device 10.

As can be seen in figures 4 and 5, the device comprises means 11 for receiving and storing data related to a plurality of customers in the mobile telephony network. The means 11 receive the data in a step schematically shown as step S10, and it stores them in a list, in a database 12. The data is provided by the entity (or entities) wishing to register the first time the customer accesses the network. The list can be completed with new customers as the entity or entities send this data in successive steps S10.

For each customer, the data received and stored in the database 12 comprises his/her IMSI, MSISDN and, preferably, the type of card (prepay, post-pay), the date the customer was inserted in the list, the time the customer was inserted in the list, an update flag (indicating if the fictitious update process has been carried out correctly), the number of update retries, etc. This data is inserted in fields (12A1,..., 12B1,...) of the database. There is a first data field (12AN,..., 12BN,...) for each customer which is a field indicating an activated/not activated state, and which comprises an activated/not activated flag and, furthermore, an activation time. When the data of a subscriber is introduced in the database, the activated/not activated flag has a value corresponding to "not activated" (for example, "0") by default, and the activated time is placed as a date and time 0 (for example, "000000-00") by default. The update flag likewise indicates that the update process has still not been carried out.

The means 13 for generating and sending the Update Location request to the HLR 9 carry out the *Update Location* request (step S11) for the different customers in a list in a consecutive manner and according to a predetermined sequence, according to the update and activated/not activated flags, as well as according to the number of update attempts carried out, and also according to the date and time each subscriber was inserted in the list, and at a predefined rhythm established for the purpose of preventing a network overload. Both the sending rhythm and sequence for the different customers can be configured, for example, to adapt the rhythm to the temporary distribution of the working load of the HLR (for example, these operations can be carried out during times in which network traffic is low, taking advantage of the fact that the HLR has free capacity).

The update location request S11 is a MAPv3 *Update Location* operation and comprises a fictitious indication of the location area, including the address (according to the number of the numbering plan) assigned to the device 10, such that the HLR 9 sends a subsequent *Cancel Location* message to the device 10. Up to step S11, it follows a series of steps similar to those steps described in relation to the conventional process in figure 2: the HLR 9 stores the address assigned to the device 10 (corresponding to a fictitious location area), and sends one or several *Insert Subscriber Data* messages (step S12) to the device 10; the device simply disregards these messages (since they do not provide anything relevant) and responds (step S13) with an *Insert Subscriber Data Result* to indicate to the HLR 9 that the data has arrived correctly, and lastly, the HLR 9 sends (step S14) an *Update Location Result,* wherein it communicates if the update process has been carried out correctly. If it has been carried out correctly, the device 10 changes the update flag indicating that the update location process has been carried out for the customer in question. If it has not been carried out correctly, the piece of data corresponding to the number of update location retries is increased in the database 12 (it goes from 0 to 1, then from 1 to 2, etc.); this piece of data can be taken into account by the device for determining when the next update location attempt should be carried out for the customer in question.

When the customer is connected to the network for the first time with a base station BTS 3 associated to the MSC/VLR 5/7, the update location process begins according to that discussed in relation to figure 2: the MSC 5 corresponding to the BSC 4 corresponding to the base station 3 in the cell of which the customer is located, sends (step S16 in figure 4) an *Update Location* request to the HLR 9 so that the HLR 9 sends the customer subscription data to the MSC 5. The HLR 9 stores the address of the VLR 7 and sends one or several *Insert Subscriber Data* messages with the requested information, etc., to the MSC 5 (step S17 in figure 4).

On the other hand and once the update location process is completed, the de-update process is carried out: the HLR informs the fictitious VLR (i.e. the device 10 in this case) that the customer in question is now controlled by the VLR/MSC 7/5.

To that end, the HLR sends (step S18 in figures 4 and 5) a *Cancel Location* message to the device 10, which responds with a *Cancel Location Result* message (step S19) to the HLR confirming that the operation has been carried out correctly.

In other words, the process of the invention is transparent for the HLR: from the point of view of the HLR, what has occurred is that the customer has simply been moved from one location area to another.

The *Cancel Location* message is received in the device 10 by the means 14 for receiving the cancel location message. As a response to said reception, the means 15 for modifying the content of a first data field modifies said field for the subscriber in question: specifically, it changes the activated/not activated flag which takes on the value corresponding to activated (for example, from "0" to "1") and the activated time: for example, the piece of data "000000-00" is replaced by the date and time the *Cancel Location* message was received, as a result of which the corresponding positions of the first field may change to, for example, "200403-15".

The content of the database 12 is periodically read and, for the customers whose activated flag has taken on the value indicating the "activated" state (for example, "1"), the data identifying the customer (for example, the MSISDN and IMSI) as well as the activated time (for example, "200403-15") is read, and this data is provided to the entity that supplied the data of the customers at the moment said data was supplied. Then, the data corresponding to these customers is deleted from the database 12.

Figure 6A shows a possible configuration of the data corresponding to a first customer A in the database 12 just after having introduced the data of said customer (i.e. just after step S10); field 12A1 includes the IMSI, field 12A2 includes the MSISDN, field 12A3 includes the update flag (it has the value "0" since steps S11-S14 have still not been carried out for this subscriber), field 12A4 includes the number of update retries (it still has the value "0" since no retry has been made) and the "first field" 12AN comprises the activated/not activated flag (which has value "0") followed by the activated time (which has the initial value 000000-00).

Figure 6B shows the same fields of the database a short time after step S18; fields 12A1 and 12A2 have not changed, but the update flag in field 12A3 has the value "1" (it changed from "0" to "1" after step S14), field 12A4 with the number of update retries has the value "1" (this indicates that only one update retry was carried out), and the "first field" 12AN shows the activated/not activated flag with value "1" (which indicates that the subscriber has been connected to the network) followed by the activated time, the value "200403-15" of which indicates that the message S18 was received on April 20, 2003, between 3:00 pm and 4:00 pm.

In one possible development of the embodiment described above, a second database (not shown in the figures) could be added. In this case, the first database 12 could store the information related to the pre-activated cards which have still not been "activated" in the system, i.e. the cards pending being registered for their "activation", and the second database could contain the data corresponding to the cards whose activation has been detected. Then, once the activation of a card is detected (due to receiving the cancel update message in step S18 described above), the data of the customer in question is passed from the first database to the second database. Thus, the first database only contains the data related to cards whose activation has still not been detected.

The relevant data contained in the second database can be sent periodically to the external destination entity which must receive the information concerning the data and time of activation of the customers, and then the data of the customers in question can be deleted form the second database. On the successive occasions when data is sent from the second database, only data of the customers whose data has been added to the second database in the interval which elapsed from the previous sending will be included.

In other words, the first database can maintain information concerning pre-activated cards pending activation (for those which the cancel location message corresponding to the corresponding step S18 in the foregoing still have not been received). The first database could include the following data:
* MSISDN
* IMSI
* Type of card flag, which can indicate, for example, if the prepay card corresponds to
   - a pre-activation (new subscription of a customer) (0),
   - a conversion (a post-pay customer who becomes a prepay customer) (1),
   - a "carryover" card (corresponding to a customer of another operator who decides to change to the operator of the network) (2).
* Date on which the pre-activation has been completely concluded in the systems of the operator, i.e. the date on which the card is defined in the systems of the operator for their later functioning. By knowing this date, the time elapsing from when the card is pre-activated until the card is activated can be calculated, interesting information, for example, for marketing and logistics.
* Update flag. This indicates if the fictitious update process has been carried out correctly (corresponds to field 12A3)
* Number of update retries (corresponds to field 12A4)

The activated/not activated flag could be disregarded since the data goes from the first to the second database as soon as the activation occurs, as a result of which it is known that if the data is in the first database, the state of the card is that of "not activated", and if it is in the second database, the state is that of "activated".

The second database could include the following data, which would be stored temporarily and which would be sent to the outside system every once in a while; the data can also be accessed for outside queries.
* MSISDN
* IMSI
* Type of card flag (explained above)
* Date on which the pre-activation in the systems of the operator has been completely concluded (explained above)
* Number of update retries; this piece of data could be interesting for detecting problems in the event that the number of retries is significant; this piece of data corresponds to that which was in field 12A4 before the data passed from the second database to the first database.
* Date and, optionally, time of activation of the customer (corresponding to the activation time, see field 12AN discussed above)
* Sent/not sent flag. This flag indicates if the data related to the customer has been sent to the external destination entity. This flag is important if the sent data is not immediately deleted after being sent. If it is not immediately deleted, the second database can include sent data that is as well as unsent data, in which case it is important to be able to distinguish between the data which has been sent to the exterior and the data which still has not been sent, such that the data which has already been sent is not sent again, and/or such that only that data which has already been sent is deleted.

Logically, that which has been described in the foregoing is only one of the possible manners of carrying out the invention. The person skilled in the art could easily make the modifications which may be suitable in each case, according to the needs and desires of the entities involved, and write the corresponding computer programs. For example, rather than modifying a first field in the database 12, a message can be directly sent to an external entity when the *Cancel Location* message is received in step S18 to modify an external database.

Throughout the present description and claims, the word "comprises" and variations thereof, such as "comprising", do not intend to exclude other steps or components.

## Claims

1. A device (10) for detecting the activation of a subscriber equipment in a cellular mobile telephony network, considering detecting the activation as the moment in which said subscriber equipment is connected to a cellular mobile telephony network for the first time, **characterized in that** it comprises:
means (11) for receiving and storing data related to at least one subscriber in the mobile telephony network in a database (12);
means (13) for generating and sending an *Update Location* request (S11) to a Home Location Register , HLR, (9) of the network for said at least one subscriber, the update request including a fictitious indication of the location area configured such that the Home Location Register , HLR, (9) sends, after receiving from a MSC (5) a subsequent *Update Location* request (S16) corresponding to the same subscriber, a subsequent *Cancel Location* message corresponding to the same subscriber to the device (10);
means (14) for receiving said *Cancel Location* message (S18) from the Home Location Register , HLR, (9);
means (15) for modifying the content of a first data field (12AN, 12BN) associated to the subscriber as a response to receiving said *Cancel Location* message (S18), said first data field being a field indicating an activation time of the subscriber equipment and/or an activated/not activated state of the subscriber equipment.

2. A device according to claim 1, **characterized in that** the first data field (12AN, 12BN) is a data field in the database (12).

3. A method for detecting the activation of a subscriber equipment in a cellular mobile telephony network, considering detecting the activation as the moment in which said subscriber equipment is connected to a cellular mobile telephony network for the first time, **characterized in that** it comprises the steps of:
receiving and storing data related to at least one subscriber in the mobile telephony network in a database (12);
generating and sending an *Update Location* request (S11) to a Home Location Register , HLR, (9) of the network for said at least one subscriber, the update request including a fictitious indication of the location area configured such that the Home Location Register , HLR, (9) sends, after receiving from a MSC (5) a subsequent Update Location request (S16) corresponding to the same subscriber, a subsequent *Cancel Location* message corresponding to the same subscriber to the device (10);
receiving said *Cancel Location* message (S18) from the Home Location Register , HLR, (9);
modifying the content of a first data field (12AN, 12BN) associated to the subscriber as a response to receiving said *Cancel Location* message (S18), said first data field being a field indicating an activation time of the subscriber equipment and/or an activated/not activated state of the subscriber equipment.

4. A method according to claim 3, **characterized in that** the first data field (12AN, 12BN) is a data field in the database (12).

5. A computer program, comprising programming instructions for making a computer carry out the method according to any of claims 3 to 4, when the program is run in the computer.

6. A computer program according to claim 5, in a support means.

## Patentansprüche

1. Vorrichtung (10) zum Erkennen der Aktivierung eines Teilnehmergerätes in einem zellularen Mobiltelefonienetzwerk, unter Berücksichtigung der Erkennung der Aktivierung als den Moment, in dem das genannte Teilnehmergerät zum ersten Mal mit einem zellularen Mobiltelefonienetzwerk verbunden wird, **dadurch gekennzeichnet, dass** sie Folgendes umfasst:
Mittel (11) zum Empfangen und Speichern von Daten in Bezug auf wenigstens einen Teilnehmer in dem Mobiltelefonienetzwerk in einer Datenbank (12);
Mittel (13) zum Erzeugen und Senden einer *Update Location* Anforderung (S11) zu einem HLR (Home Location Register) (9) des Netzwerks für den genannten wenigstens einen Teilnehmer, wobei die Update-Anforderung eine fiktive Anzeige des Ortsbereichs beinhaltet, so konfiguriert, dass das HLR (Home Location Register) (9) nach dem Empfang einer nachfolgenden *Update Location* Anforderung (S 16) von einer MSC (5), die demselben Teilnehmer entspricht, eine nachfolgende *Cancel Location* Nachricht, die demselben Teilnehmer entspricht, zu der Vorrichtung (10) sendet;
Mittel (14) zum Empfangen der genannten *Cancel Location* Nachricht (S18) von dem HLR (Home Location Register) (9);
Mittel (15) zum Modifizieren des Inhalts eines ersten Datenfeldes (12AN, 12BN), das mit dem Teilnehmer assoziiert ist, als Reaktion auf den Empfang der genannten *Cancel Location* Nachricht (S18), wobei das genannte erste Datenfeld ein Feld ist, das eine Aktivierungszeit des Teilnehmergerätes und/oder einen Aktiviert/Nichtaktivert-Zustand des Teilnehmergerätes anzeigt.

2. Vorrichtung nach Anspruch 1, **dadurch gekennzeichnet, dass** das erste Datenfeld (12AN,12BN) ein Datenfeld in der Datenbank (12) ist.

3. Verfahren zum Erkennen der Aktivierung eines Teilnehmergerätes in einem zellularen Mobiltelefonienetzwerk, unter Berücksichtigung der Erkennung der Aktivierung als den Moment, in dem das genannte Teilnehmergerät zum ersten Mal mit einem zellularen Mobiltelefonienetzwerk verbunden wird, **dadurch gekennzeichnet, dass** es die folgenden Schritte beinhaltet:
Empfangen und Speichern von Daten in Bezug auf wenigstens einen Teilnehmer in dem Mobiltelefonienetzwerk in einer Datenbank (12);
Erzeugen und Senden einer *Update Location* Anforderung (S11) zu einem HLR (Home Location Register) (9) des Netzwerks für den genannten wenigstens einen Teilnehmer, wobei die Update-Anforderung eine fiktive Anzeige des Ortsbereichs beinhaltet, so konfiguriert, dass das HLR (Home Location Register) (9) nach dem Empfang einer nachfolgenden *Update Location* Anforderung (S16) von einer MSC (5), die demselben Teilnehmer entspricht, eine nachfolgende *Cancel Location* Nachricht, die demselben Teilnehmer entspricht, zu der Vorrichtung (10) sendet;
Empfangen der genannten *Cancel Location* Nachricht (S18) von dem HLR (Home Location Register) (9);
Modifizieren des Inhalts eines ersten Datenfeldes (12AN, 12BN), das mit dem Teilnehmer assoziiert ist, als Reaktion auf den Empfang der genannten *Cancel Location* Nachricht (S18), wobei das genannte erste Datenfeld ein Feld ist, das eine Aktivierungszeit des Teilnehmergerätes und/oder einen Aktiviert/Nichtaktivert-Zustand des Teilnehmergerätes anzeigt.

4. Verfahren nach Anspruch 3, **dadurch gekennzeichnet, dass** das erste Datenfeld (12AN, 12BN) ein Datenfeld in der Datenbank (12) ist.

5. Computerprogramm, das Programmbefehle umfasst, um einen Computer zu veranlassen, das Verfahren nach einem der Ansprüche 3 bis 4 auszuführen, wenn das Programm in dem Computer abgearbeitet wird.

6. Computerprogramm nach Anspruch 5 in einem Träger.

## Revendications

1. Dispositif (10) destiné à détecter l'activation d'un équipement d'abonné dans un réseau de téléphonie mobile cellulaire, lequel considère la détection de l'activation comme étant le moment auquel ledit équipement d'abonné est connecté pour la première fois à un réseau de téléphonie mobile cellulaire, **caractérisé en ce qu'**il comprend :
des moyens (11) pour recevoir et stocker, dans une base de données (12), des données relatives à au moins un abonné dans le réseau de téléphonie mobile ;
des moyens (13) pour générer et envoyer une demande *Update Location* (S11) vers un registre des positions de rattachement, HLR, (9) du réseau pour ledit au moins un abonné, la demande de mise à jour incluant une indication fictive de la zone de rattachement, configurés de sorte qu'après avoir reçu de la part d'un MSC (5) une demande ultérieure *Update Location* (S16) correspondant au même abonné, le registre des positions de rattachement, HLR, (9) va envoyer au dispositif (10) un message *Cancel Location* ultérieur correspondant au même abonné ;
des moyens (14) pour recevoir ledit message *Cancel Location* (S18) en provenance du registre des positions de rattachement, HLR, (9) ;
des moyens (15) pour modifier le contenu d'un premier champ de données (12AN, 12BN), associé à l'abonné, à titre de réponse suite à la réception dudit message *Cancel Location* (S18), ledit premier champ de données étant un champ qui indique une heure d'activation de l'équipement d'abonné et/ou un état activé/désactivé de l'équipement d'abonné.

2. Dispositif selon la revendication 1, **caractérisé en ce que** le premier champ de données (12AN, 12BN) est un champ de données se trouvant dans la base de données (12).

3. Procédé destiné à détecter l'activation d'un équipement d'abonné dans un réseau de téléphonie mobile cellulaire, lequel considère la détection de l'activation comme étant le moment auquel ledit équipement d'abonné est connecté pour la première fois à un réseau de téléphonie mobile cellulaire, **caractérisé en ce qu'**il comprend les étapes consistant à :
recevoir et stocker, dans une base de données (12), des données relatives à au moins un abonné dans le réseau de téléphonie mobile ;
générer et envoyer une demande *Update Location* (S11) vers un registre des positions de rattachement, HLR, (9) du réseau pour ledit au moins un abonné, la demande de mise à jour incluant une indication fictive de la zone de rattachement, configurés de sorte qu'après avoir reçu de la part d'un MSC (5) une demande ultérieure *Update Location* (S16) correspondant au même abonné, le registre des positions de rattachement, HLR, (9) va envoyer au dispositif (10) un message *Cancel Location* ultérieur correspondant au même abonné ;
recevoir ledit message *Cancel Location* (S18) en provenance du registre des positions de rattachement, HLR, (9) ;
modifier le contenu d'un premier champ de données (12AN, 12BN), associé à l'abonné, à titre de réponse suite à la réception dudit message *Cancel Location* (S18), ledit premier champ de données étant un champ qui indique une heure d'activation de l'équipement d'abonné et/ou un état activé/désactivé de l'équipement d'abonné.

4. Procédé selon la revendication 3, **caractérisé en ce que** le premier champ de données (12AN, 12BN) est un champ de données se trouvant dans la base de données (12).

5. Programme d'ordinateur comprenant des instructions de programmation destinées à obliger un ordinateur à réaliser le procédé selon l'une quelconque des revendications 3 à 4, lorsque le programme est exécuté sur l'ordinateur.

6. Programme d'ordinateur selon la revendication 5, dans des moyens de support.
